(19) Europäisches Patentamt
European Patent Office
Office européen des brevets

(11) EP 0 556 781 B1

(12) EUROPEAN PATENT SPECIFICATION

(45) Date of publication and mention of the grant of the patent:
**12.05.1999 Bulletin 1999/19**

(51) Int Cl.[6]: **C08J 5/18**
// C08L33/24

(21) Application number: **93102417.8**

(22) Date of filing: **16.02.1993**

(54) **Water-soluble thermoplastic film and use thereof**

Wasserlöslicher thermoplastischer Film und seine Verwendung

Film thermoplastique soluble dans l'eau et son utilisation

(84) Designated Contracting States:
**DE FR GB**

(30) Priority: **17.02.1992 JP 61502/92**
**14.12.1992 JP 352781/92**

(43) Date of publication of application:
**25.08.1993 Bulletin 1993/34**

(73) Proprietor: **SHOWA DENKO KABUSHIKI KAISHA**
**Minato-ku, Tokyo (JP)**

(72) Inventors:
- **Kamata, Hirotoshi, c/o Chemicals Research Lab. Kawasaki-shi, Kanagawa (JP)**
- **Yamaguchi, Tetsuhiko, c/o Chemicals Research Lab. Kawasaki-shi, Kanagawa (JP)**
- **Hosoda, Yoshikazu, c/o Chemicals Research Lab. Kawasaki-shi, Kanagawa (JP)**
- **Aizawa, Toshiyuki, c/o Oita Research Lab. Ohita-shi, Oita (JP)**
- **Nakamura, Hitoshi, c/o Oita Research Lab. Ohita-shi, Oita (JP)**

(74) Representative: **Strehl Schübel-Hopf & Partner**
**Maximilianstrasse 54**
**80538 München (DE)**

(56) References cited:
**EP-A- 0 155 606** **EP-A- 0 425 436**
**US-A- 3 285 819** **US-A- 4 904 519**

- **DATABASE WPIL, no. 92-404 876, DERWENT PUBLICATIONS LTD, London, GB; & JP-A-04 304 215 ( KURARAY CO. LTD. )**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 556 781 B1

## Description

The present invention relates to a water-soluble thermoplastic poly(N-vinylacetamide) film, and more particularly to a film having excellent cold water-solubility, excellent alkali resistance, and excellent acid resistance which is composed of a water-soluble thermoplastic copolymer of N-vinylacetamide and a vinyl monomer obtained by copolymerization between N-vinylacetamide with a vinyl monomer other than N-vinylacetamide which decreases softening point of a homopolymer of N-vinylacetamide to increase its film properties, as well as to specific uses thereof.

Taking into consideration their solubility or dispersibility, most of chemicals such as water-soluble medicines, detergents, agricultural chemicals such as insecticides, herbicides, and bacteriocides, dyes, and pigments are packaged in the form of powder before they are put on the market. Various problems such as adverse influences on ambient environment arise when handling such powders. For example, there is more than a theoretical possibility that consumers or users will contact the powdery contents or the powder will be scattered in the air and adhere on a mucous membrane such as tracheal membrane to cause inflammation when they open the packaging or are metering the contents. Also, care must be taken for disposal of packaging materials after use on which residual chemicals adhere.

Hence, in order to solve the above-mentioned problems involved in the use of the powdery products, attention has been directed to water-soluble films composed of water-soluble thermoplastic resin and packaging materials composed of said films which are themselves dissolved upon use.

Description of Related Art

Hitherto, polyvinyl alcohol (hereinafter, referred to as "PVA") obtained by hydrolyzing (saponifying) the acetoxy groups of polyvinyl acetate with an acid or alkali to convert them into hydroxyl groups has been known as a representative example of water-soluble thermoplastic resin.

PVA suffers from denaturation (crystallization) which proceeds with lapse of time to become insoluble in cold water when its degree of saponification increases to 95 mole % or more. Conversely, when its degree of saponification is decreased to 80 mole % or less to suppress the degree of crystallization, the hydrophobicity of the polymer increases to render the polymer insoluble in water. That is, PVA is soluble even in cold water when it has a degree of saponification within the range of 80 to 95 mole %, and outside this range it is insoluble in water. Further, when cold water-soluble PVA having a degree of saponification of 80 to 95 mole % is molded into a molding such as a packaging film, and objects to be packaged are acidic or alkaline, PVA is rapidly hydrolyzed to increase its degree of saponification so that it becomes insoluble in cold water. PVA crosslinks to become insoluble in water when heated upon heat sealing or the like.

Recently, in order to solve the above-mentioned problems involved in the water solubility of PVA, various investigations have been made.

For example, Japanese Patent Publication No. 20845/1967 discloses cold water-soluble film, sheet and filament made of aldolacetalated PVA In this system, a problem arises in the control of reaction or aldolacetalation since the molecule of an aldol has a hydroxyl group and an aldehyde group and aldols can react with each other when they are subjected to reaction with PVA. This indicates that it is difficult to stably produce, on an industrial scale, acetalated PVA having a degree of acetalation enough to maintain water solubility for a long period of time.

Also, there have been proposed water-soluble resin compositions obtained by blending PVA with one or more other polymers. For example, Japanese Patent Publication No. 1487/1968 discloses a composition comprising a high saponification PVA (a degree of saponification: 97 mole % or more), a low saponification PVA (a degree of saponification: 75 to 92 mole %), and starch. Japanese Patent Application Laid-Open No. 12540/1982 discloses a blend of PVA having a degree of saponification of 80 to 95 mole % and a polyacrylic acid having a molecular weight of 30,000 to 40,000. Japanese Patent Application Laid-Open No. 24351/1988 (U.S. Patents 4,119,604, 4,155,971 and 4,156,047) discloses a composition composed of a low molecular weight PVA and a medium molecular weight PVA, each having a degree of saponification of 85 to 90 mole %, an ethylenically unsaturated group-containing alkyl ester (e.g., alkyl acrylate, and alkyl methacrylate), and polyethylene glycol. Since none of these compositions is stable to alkaline components, it is inevitable that the composition becomes insoluble in water according as hydrolysis proceeds.

Further, a composition obtained by denaturing PVA with an unsaturated carboxylic acid has been proposed ("Application and Market of Water-soluble High Polymers", CMC Publishing Co., Ltd., Tokyo (1988) pp. 264). The cold water solubility of this composition is deteriorated when in contact with an acidic substance.

Water-soluble or hydrophilic polymer includes, besides the above-mentioned PVA, polyvinylpyrrolidone, acrylic acid/acrylamide copolymer, starch, carboxymethylcellulose, protein, etc. These polymers have problems that they are difficult to process into films, and their aqueous solutions gel so that they cannot be applied to water-soluble film base.

On the other hand, related to the present invention, there have been known homopolymers and copolymers of N-vinylacetamide (hereinafter, referred to as "NVA" for brevity) and its homologues, and compositions containing

them.

For example, as compositions containing NVA polymers, there have been disclosed a photosensitive resin composition (Japanese Patent Application Laid-Open No. 21736/1983), adhesive aqueous polymer dispersion (Japanese Patent Application Laid-Open No. 5361/1983 corresponding to U.S. Patent 4,656,216), and thermoplastic, cold water-soluble film and molded articles (Japanese Patent Application Laid-Open No. 228551/1985).

US-A-3 285 819 discloses polymers and copolymers of N-methyl-N-vinylacetamide which are water-soluble. These polymers and copolymers may comprise a plasticizer.

EP-A-155 606 relates to a water-soluble thermoplastic film which may be used for packaging purposes. This film comprises a mixture of cold water-soluble polyvinyl alcohol, a polyfunctional aliphatic alcohol as a plasticizer and a water-soluble polymer or copolymer which comprises monomer units of an N-substituted carboxylic acid amide.

Also, as copolymers of NVA and its homologues, there have been proposed copolymers of secondary N-vinylcarboxamide and an olefinic unsaturated compound for molded articles and fibers (Japanese Patent Publication No. 23356/1970 corresponding to GB1158539), copolymers of NVA and a perfluoroalkyl group-containing ethylenically unsaturated compound for dispersants (Japanese Patent Application Laid-Open No. 186713/1988 corresponding to U.S. Patent 4,840,489), copolymers of NVA and a vinyl monomer such as acrylic acid ester, etc. as a flowability increasing agent for crude oil recovery (Japanese Patent Application Laid-Open No. 85286/1977 corresponding to GB1548158, Japanese Patent Application Laid-Open No. 217058/1983 corresponding to U.S. Patent 4,048,077, Japanese Patent Application Laid-Open No. 86614/1984 corresponding to EP105529) and so on.

However, no film has been known that is composed of or mainly comprised by a (co)polymer of NVA and can be applied to water-soluble packaging material base.

Summary of the Invention

Therefore, an object of the present invention is to obviate the above-mentioned defects of the water-soluble thermoplastic resin compositions based on PVA, and to provide a water-soluble thermoplastic film which is excellent in various characteristics such as water solubility, film forming property (processability), strength, flexibility, and heat sealability.

Focusing on NVA which is excellent in alkali resistance and acid resistance as a component of a water-soluble resin, the present inventors have investigated copolymers of NVA and other monomers. As a result, it has now been found that copolymers of NVA and a specified vinyl monomer are thermoplastic copolymers which decrease the softening points of homopolymers of NVA, improve film properties, and solve the above-mentioned various defects encountered by PVA resins conventionally used as a water-soluble resin, and that blends of the above-mentioned copolymers and a water-soluble plasticizer give rise to water-soluble films having improved film flexibility and improved heat sealability. The present invention has been completed based on these discoveries.

That is, the present invention provides:

A water-soluble thermoplastic film comprising:

a copolymer comprising 35 to 95 % by weight of N-vinylacetamide, 5 to 65 % by weight of a vinyl monomer other than N-vinylacetamide, and 0.5 to 30 parts by weight per 100 parts by weight of said copolymer, of a water-soluble plasticizer having a polyoxyalkylene group, wherein said vinyl monomer is at least one compound selected from the group consisting of:

compounds represented by general formula (I):

$$CH_2=CH\text{-}O\text{-}CO\text{-}R_1 \qquad (I)$$

wherein $R_1$ is a $C_1$-$C_4$ lower alkyl group;

compounds represented by general formula (II):

$$CH_2=C(R_2)\text{-}COO\text{-}R_3 \qquad (II)$$

wherein $R_2$ is a hydrogen atom or a methyl group; $R_3$ is a $C_1$-$C_4$ lower alkyl group;

compounds represented by general formula (III):

$$CH_2{=}C(R_4)-COO(CH_2\underset{R_5}{\underset{|}{C}}HO)_m-(CH_2\underset{R_{5'}}{\underset{|}{C}}HO)_nR_6 \qquad (III)$$

wherein $R_4$, $R_5$ and $R_{5'}$ each are a hydrogen atom or a methyl group; $R_6$ is a hydrogen atom, a $C_1$-$C_4$ lower alkyl group, or a phenyl group; m and n are zero or an integer of 1 to 100 provided that m and n are not zero simultaneously;

compounds represented by general formula (IV):

$$CH_2{=}CH\text{-}CO\text{-}R_7 \qquad (IV)$$

wherein $R_7$ is a $C_1$-$C_4$ lower alkyl group;
compounds represented by general formula (V):

$$CH_2{=}CH\text{-}CO\text{-}N(R_8)R_9 \qquad (V)$$

wherein $R_8$ and $R_9$ each are a hydrogen atom or a $C_1$-$C_4$ lower alkyl group, provided that $R_8$ and $R_9$ are not hydrogen atoms simultaneously;

compounds represented by general formula (VI):

$$CH_2{=}CH\text{-}O\text{-}R_{10} \qquad (VI)$$

wherein $R_{10}$ is a $C_1$-$C_4$ lower alkyl group;

compounds represented by general formula (VII):

$$CH_2{=}C(R_{11})\text{-}CN \qquad (VII)$$

wherein $R_{11}$ is a hydrogen atom or a methyl group.

This invention further provides a water-soluble packaging material, seed tape base, special printing material base, etc. made of the water-soluble thermoplastic film as described above.

Detailed Description of the Invention

Hereinafter, the present invention will be described in detail.

Vinyl Monomer

Vinyl monomers used as a comonomer upon preparing copolymers for the water-soluble thermoplastic films of the present invention are those monomers which have both thermoplasticity and water solubility sufficient for the copolymers thereof with NVA to be molded into films, etc.

Vinyl monomers which can give rise to copolymers having such properties will be explained concretely below.

As the compound represented by general formula (I), there can be cited, for example, vinyl acetate, vinyl propionate, vinyl butyrate, vinyl isobutyrate, etc.. In particular, vinyl acetate is preferred.

As the compound represented by general formula (II), there can be cited, for example, methyl (meth)acrylate, ethyl (meth)acrylate, n-propyl (meth)acrylate, n-butyl (meth)acrylate, isobutyl (meth)acrylate, sec-butyl (meth)acrylate, t-butyl (meth)acrylate, etc. In particular, methyl acrylate and ethyl acrylate are preferred.

As the compound represented by general formula (III), there can be cited, for example, polyethylene glycol (meth)acrylate, polypropylene glycol (meth)acrylate, polyethylene glycol polypropylene glycol methacrylate, 2-methoxyethyl acrylate, 2-butoxyethyl acrylate, ethoxydiethylene glycol acrylate, methoxytriethylene glycol acrylate, methoxydipropylene glycol acrylate, phenoxypolyethylene glycol acrylate, methoxypolyethylene glycol (meth)acrylate, methoxydiethylene glycol methacrylate, 2-phenoxyethyl methacrylate, etc.. In particular, 2-methoxyethyl acrylate, ethoxydiethylene glycol acrylate, methoxytriethylene glycol acrylate, methoxypolyethylene glycol (meth)acrylate, methoxydiethylene glycol methacrylate, and polyethylene glycol (meth)acrylate are preferred.

As the compound represented by general formula (IV), there can be cited, for example, methyl vinyl ketone, ethyl vinyl ketone, n-propyl vinyl ketone, isopropyl vinyl ketone, t-butyl vinyl ketone, isobutyl vinyl ketone, etc.. In particular, methyl vinyl ketone and ethyl vinyl ketone are preferred.

The compound represented by general formula (V), there can be cited, for example, N-methylacrylamide, N-ethylacrylamide, N-isopropylacrylamide, N-n-butylacrylamide, N-sec-butylacrylamide, N-isobutylacrylamide, N-t-butylacrylamide, butylacrylamide, N,N-dimethylacrylamide, N,N-diethylacrylamide, N,N-di-n-butylacrylamide, N,N-isobutylacrylamide, etc.. In particular, N,N-dimethylacrylamide and N,N-diethylacrylamide are preferred.

The compound represented by general formula (VI), there can be cited, for example, methyl vinyl ether, ethyl vinyl ether, n-propyl vinyl ether, isopropyl vinyl ether, n-butyl vinyl ether, sec-butyl vinyl ether, isobutyl vinyl ether, t-butyl vinyl ether. In particular, methyl vinyl ether and ethyl vinyl ether are preferred.

As the compound represented by general formula (VII), there can be cited, for example, acrylonitrile, methacrylonitrile.

Besides the above-described vinyl monomers, any vinyl monomers can be used that can give rise to copolymers with NVA within the range of composition described in claims which have both water solubility and thermoplasticity. These vinyl monomers may be used singly or two or more of them may be used in combination upon copolymerization.

In the present invention, while it may vary depending on the kind of the vinyl monomer, copolymerization ratio of the vinyl monomer and NVA is within the range where copolymers having both water solubility and thermoplasticity can be obtained. Generally, NVA : vinyl monomer = 35 to 95 % by weight : 65 to 5 % by weight. If the ratio of NVA is below 35 % by weight, (i.e, the ratio of the vinyl monomer exceeds 65 % by weight), the resulting polymer becomes insoluble in water or fails to have sufficient acid and alkali resistances. If the ratio of NVA exceeds 95 % by weight (the ratio of the vinyl monomer is below 5 % by weight), flexibility is lost or heat sealing property is deteriorated.

Copolymerization ratios of vinyl monomers which can be used in the present invention will be described below.

When the vinyl monomer is a compound represented by general formula (I) in which $R_1$ is an alkyl group having 1 to 2 carbon atoms, a compound represented by general formula (II) in which $R_3$ is an alkyl group having 1 to 2 carbon atoms, a compound represented by general formula (III), a compound represented by general formula (IV) in which $R_7$ is an alkyl group having 1 to 2 carbon atoms, a compound represented by general formula (V) in which the sum of carbon atoms of $R_8$ and $R_9$ is 1 to 4, and a compound represented by general formula (VI) in which $R_{10}$ is an alkyl group having 1 to 2 carbon atoms, the ratio of the vinyl monomer is 5 to 65 % by weight, preferably 20 to 60 % by weight.

When the vinyl monomer is a compound represented by general formula (I) in which $R_1$ is an alkyl group having 3 to 4 carbon atoms, a compound represented by general formula (II) in which $R_3$ is an alkyl group having 3 to 4 carbon atoms, a compound represented by general formula (IV) in which $R_7$ is an alkyl group having 3 to 4 carbon atoms, a compound represented by general formula (V) in which the sum of carbon atoms of $R_8$ and $R_9$ is 5 to 8, and a compound represented by general formula (VI) in which $R_{10}$ is an alkyl group having 3 to 4 carbon atoms, the ratio of the vinyl monomer is 5 to 25 % by weight, preferably 5 to 20 % by weight.

When the vinyl monomer is a compound represented by general formula (VII), the ratio of the vinyl monomer is 5 to 40 % by weight, preferably 10 to 30 % by weight.

When the vinyl monomer is a combination of two or more of the compounds represented by general formula (I) to (VII) described above, the ratio of NVA is 5 to 65 % by weight, preferably 20 to 60 % by weight.

Polymerization Process

While there is no particular limitation on the polymerization process for preparing the water-soluble thermoplastic resin of the present invention, copolymerization by radical polymerization is preferred. As the radical polymerization, any of solution polymerization, precipitation polymerization, bulk polymerization, reverse suspension polymerization, etc. can be used. In view of ease of control of reaction, preferred are solution polymerization in which a monomer and a radical initiator are dissolved in water or a mixed solvent containing water and an organic solvent soluble in water and the temperature is elevated to initiate the polymerization, and precipitation polymerization in which a polymer produced in a similar manner is precipitated with an organic solvent in which the polymer is insoluble.

Initiator

The polymerization initiator may be selected from organic peroxides, azobis compounds, and redox compounds, in accordance with the solubility in the polymerization solvent used. Specific examples of such a polymerization initiator include azobis compounds such as 2,2'-azobisisobutyronitrile, 2,2'-azobis (2-amidinopropane) dihydrochloride, and 2,2'-azobis (N,N'-dimethyleneisobutylamidine) dihydrochloride, organic peroxides such as benzoyl peroxide, and

lauroyl peroxide, redox initiators such as sodium persulfate, and potassium persulfate.

The amount of the initiator which can be used in the present invention may be selected freely within the range of 0.01 to 5 % by weight based on the weight of the monomer used. Preferably, the amount of the initiator is 0.05 to 3 % by weight, and more preferably 0.1 to 2 % by weight. If the amount of the initiator exceeds 5 % by weight, the reaction proceeds abruptly, and control of the reaction becomes difficult, or the molecular weight of the resulting copolymer decreases so that the strength of the copolymer after molding could decrease. Further, the amount of the initiator of below 0.01 % by weight could give too low a yield.

Polymerization Solvent

Any solvent may be used in the polymerization reaction so far as it does not inhibit radical polymerization and it dissolves NVA and vinyl monomers used together therewith. Examples of such a solvent include water, organic solvents such as ethers, e.g., isopropyl ether, dioxane, tetrahydrofuran, ethylene glycol dimethyl ether, diethylene glycol dimethyl ether, etc., esters, e.g., methyl acetate, ethyl acetate, isopropyl acetate, butyl acetate, isoamyl acetate, etc., ketones, e.g., acetone, methyl ethyl ketone, methyl isobutyl ketone, cyclohexanone, etc., aromatic compounds, e.g., xylene, toluene, etc., alkylamides, e.g., dimethylformamide, dimethylacetamide, etc.. These solvents may be used singly or two or more of them may be use as mixtures. Particularly preferred solvents are water, tetrahydrofuran, dioxane, diethylene glycol dimethyl ether, acetone, methyl ethyl ketone, ethyl acetate, etc..

While it vary depending on the polymerization process used, the amount of the solvent is the same amount as the monomer to 20 times, preferably 1.5 to 10 times as much as the monomer when solution polymerization or precipitation polymerization is used.

Monomer Concentration

The concentration of monomer upon polymerization may be selected freely depending on the polymerization process used. However, in the case of solution polymerization or precipitation polymerization, if the concentration of monomer exceeds 50 % by weight, the reaction proceeds abruptly to make it difficult to control the reaction. On the other hand, if it is below 5 % by weight, the reaction takes a long time or yield per reaction becomes low, thus aggravating production efficiency. Therefore, suitable monomer concentration is 5 to 50 % by weight, preferably 10 to 40 % by weight.

Polymerization Temperature and Polymerization Time

The polymerization temperature and polymerization time may be selected freely depending on the monomer, polymerization initiator, solvent to be used. Usually, the polymerization temperature is preferably 20°C to boiling point of the solvent, and the polymerization time is preferably 1 to 8 hours.

The molecule of the copolymer thus obtained is considered to be of a linear structure in which NVA and vinyl monomer other than NVA are arranged at random, or a part of which is branched. Degree of polymerization is closely related to the solubility of the copolymer in water, and the strength of the molded article. If the degree of polymerization is too high, and the polymer is difficult to be soluble in water and to mold. On the other hand, if it is too low, the strength of the moldings decreases. Average degree of polymerization of the copolymer of the present invention is 20 to 100,000, preferably 50 to 10,000, and more preferably 100 to 1,000.

Water-soluble Plasticizer

In the present invention, the blending of a water-soluble plasticizer results in decrease in the softening point of the copolymer and improves flexibility of film, heat sealability, and speed of dissolution in water. That is, more improved water-soluble films can be obtained by the use of the water-soluble plasticizer.

As such a plasticizer, there can be cited, for example, polyhydric alcohols such as glycerol, and sorbitol, diethylene glycol, triethylene glycol, polyethylene glycol, polyglycerol, tetraethylene glycol, triethanolamine, 1,3-butanediol, etc., which have been generally known as a water-soluble plasticizer. Among them, polyhydric alcohols are highly hygroscopic and tend to cause blocking under high humidity conditions. Plasticizers having low molecular weights tend to cause bleeding, thus increasing hygroscopicity. For this reason, water-soluble plasticizers having low hygroscopicities and relatively high molecular weights are preferred. Examples of such a plasticizer include polyoxyalkylene group-containing compounds, e.g., compounds having a polyoxyethylene group such as polyethylene glycol (molecular weight: 1,500 or less), polyethylene glycol monomethyl ether, polyethylene glycol monolauryl ether, polyethylene glycol triglyceryl ether, polyethylene glycol monolaurate, polyethylene glycol monostearate, polyethylene glycol laurylamide, and polyethylene glycol stearylamide, compounds having a polyoxypropylene group such as polypropylene glycol (molecular weight: 10,000 or less), compounds having two or more polyoxyalkylene groups such as polyethylene glycol polypropylene glycol ether, and polyethylene glycol polypropylene glycol block copolymer. In particular, those plasticizers having molecular weights such that they are liquid or paste at room temperature are preferred.

The water-soluble plasticizers may be used singly or two or more of them may be used in combination.

In the present invention, blend ratio of the copolymer of NVA and the above-mentioned water-soluble plasticizer is selected freely within the range of 0.5 to 30 parts by weight, preferably 1 to 20 parts by weight, and more preferably 2 to 15 parts by weight, of the plasticizer per 100 parts by weight of the copolymer. If the blend ratio of the water-soluble plasticizer is below 0.5 part by weight per 100 parts by weight of the copolymer, the resulting composition is not endowed with sufficient thermoplasticity while the blend ratio exceeding 30 parts by weight of the plasticizer per 100 parts by weight of the copolymer results in high hygroscopicity so that blocking tends to occur under high humidity conditions.

Method for Molding Copolymer

Next, method for molding the copolymer obtained will be explained.

Copolymerization reaction mixture of NVA and a vinyl monomer is in the form of a highly viscous liquid, agar-like gel, or slurry. In any state, the copolymer produced is isolated by removal of solvents. Then the copolymer obtained is charged in a molding machine after being melted and molded into a film, etc.. Film formation may also be performed by a solution casting method after diluting or dissolving the copolymer with a suitable solvent. As the method of molding, there can be applied commonly used extrusion molding methods such as a T-die method, and an inflation method. Molding temperature may be selected freely within the range of 50 to 300°C. It is desirable to perform the molding at a temperature higher than the softening point of the copolymer.

Upon molding, water-soluble dyes or pigments for coloration may be added in addition to the plasticizer.

The water-soluble thermoplastic film of the present invention suffers less change in chemical and physical properties after prolonged storage and therefore its solubility in water scarcely changes, and has excellent alkali resistance due to NVA component. Therefore, the film of the invention can be used for various purposes making the most of the properties. Specifically, the water-soluble thermoplastic film of the present invention can be used as a packaging material for packaging detergents, agricultural chemicals, dyestuff, industrial chemicals, flocculants, etc., packaging material for sanitary goods such as napkin, disposable gloves, etc., leakage-preventing membrane of napkin, laundry bag, seed tape base, materials for special printing, and the like advantageously.

Hereinafter, respective uses of the film of the present invention will be explained concretely.

(1) Packaging material for detergents, agricultural chemicals, etc.

Powder detergent (main components are surfactant, builder, bleaching agent, enzyme, etc.) is divided to an amount of use at a time (20 to 40 g) and packaged in a small bag. Upon use, the small bag can be thrown into water in an electric washing machine as it is, and allowed to dissolve. The thickness of the film for powder detergents suitable for this purpose is is preferably 15 to 50 μm in order to meet the mechanical strength and speed of dissolution. Since detergents are alkaline, the copolymer of the present invention, which contain the alkali resistant NVA component is particularly suitable for this purpose. The use of the film of the present invention as a packaging material for powder detergent enables one to use the detergent without direct contact with the contents, facilitates the metering of the detergent in advance, which leads to rationalization of dissolution operation and helps one use proper amount of the detergent, avoids troublesome disposal of waste packaging materials after use, and so on.

When used as a packaging material for agricultural chemicals, it is suited particularly as a packaging material for wettable dust, and emulsifiable concentrate. As the objective agricultural chemicals, there can be cited, for example, insecticides, bacteriocides, herbicides, acaricides, etc. While generally, agricultural chemicals are finely divided and therefore when the packaging is open the chemicals will scatter, giving an adverse influence on the skin, and respiratory organs, the scattering of the chemicals powder can be prevented by packaging it with the water-soluble film.

(2) Laundry bag for hospitals

By packaging and sealing contaminated apparatuses, cloths, sheets used in hospitals in bags made of a water-soluble film in situ, and sending the bags as they are to laundering facilities, scattering of pathogenic microbes in hospitals is suppressed so that secondary infection can be prevented. When the water-soluble film is used as a laundry bag for hospitals, it must meet aptitude conditions that it is insoluble in water at room temperature, but soluble in hot water (55 to 60°C), its wet strength is high, and it does not break during usual handling and so on.

(3) Seed tape base

Water-soluble film can be used such that seeds of vegetables such as radish, burdock, carrot, and spinach, and flowering plants are arranged at a constant distance on a tape made of the water-soluble film, and tape is wound so as to wrap the seeds, and then a thread is wound around spirally to fix the seeds, or seeds are arranged between two sheets of film and the film sheets are melt bonded together for fixing. Nutritional components for plants and the like may be incorporated in the tape. The film is dissolved by arranging it on a line on a farm, covering it with soil, and spreading water on it, which can be used as suitable means for sowing seeds at regular intervals. While it is important to sowing seeds on a straight line from the viewpoint of working efficiency upon weeding or harvesting, or to sow seeds at constant distance between one and another from the viewpoint of growth of the plant, the sowing seeds can be performed with ease without so much efforts.

(4) Special printing

A water-soluble film on which a pattern has been printed is floated on a liquid surface with its printed surface up. Then, a material to be printed is put on the water-soluble film, and liquid pressure is applied to transfer the pattern from the film to the material. This printing method can be applied to building materials, aluminum sashes, woodworks, business apparatuses, stone materials, etc. The film after printing can be removed by washing with water.

Also, A water-soluble film may be printed with a hydrophobic ink to form a printed portion which is hydrophobic, and a nonprinted portion which is hydrophilic. With this difference in hydrophilicity, there occurs difference in elasticity in the film when it is wetted with water. This property of the film is utilized to form unevenness on the surface of uncured gypsum, cement, etc. in accordance with the printing pattern used. This technology is useful in wall surface decoration and the like. The film has a high elasticity when wetted and is suitable for printing on materials which require that the film can give a force strong enough to encave the surface of gypsum or the like and also capability to keep its shape.

Further, the water-soluble thermoplastic film of the present invention can be applied to films for screen printing for the manufacture of printed substrates, flexible substrates, touch panels, etc. in the field of electronics industries.

Examples

Hereinafter, the present invention will be described in more detail by preparation examples for the preparation of copolymers, examples and application examples for water-soluble thermoplastic film. However, the present invention should not be construed as being limited thereto.

<u>Preparation Example 1-3</u>

Under the conditions shown in Table 1, NVA, one of vinyl monomers, and water (400 g) as a solvent were charged in a 1 liter four-necked flask equipped with a stirrer, a nitrogen gas inlet pipe, and a condenser. In a nitrogen gas atmosphere, 2,2'-azobis(2-amidinopropane) dihydrochloride (0.10 g) as a polymerization initiator was added thereto and the temperature of the mixture was elevated to a predetermined temperature while stirring. Polymerization was allowed to proceed at that temperature for a predetermined time, and then the reaction mixture was allowed to cool to obtain a gel-like polymerizate, to which was added about 2 liters of water to dissolve the gel. Thereafter, the resulting solution was poured in about 10 liters of acetone to precipitate and purify the copolymer. Thus, water-soluble copolymers were obtained in yields shown in Table 1, respectively.

<u>Preparation Example 4</u>

Under the conditions shown in Table 1, NVA, a vinyl monomer, and dioxane (400 g) as a solvent were charged in a 1 liter four-necked flask equipped with a stirrer, a nitrogen gas inlet pipe, and a condenser. In a nitrogen gas atmosphere, benzoyl peroxide (0.10 g) as a polymerization initiator was added thereto and the temperature of the mixture was elevated to a predetermined temperature while stirring. The resulting copolymer precipitated in dioxane. Polymerization was allowed to proceed at that temperature for a predetermined time, and then the reaction mixture was allowed to cool to obtain a slurry-like polymerizate. This was dissolved in about 2 liters of methanol. Thereafter, the resulting solution was poured in about 10 liters of acetone to precipitate and purify the copolymer. Thus, a water-soluble copolymer was obtained in a yield shown in Table 1.

<u>Preparation Example 5</u>

Under the conditions shown in Table 1, NVA, a vinyl monomer, dioxane (400 g) as a solvent, and 2,2'-azobisisobutyronitrile (0.10 g) as a polymerization initiator were reacted and post-treated in a manner similar to that in Preparation Example 4 to obtain a water-soluble copolymer in a yield shown in Table 1.

Preparation Example 6

Under the conditions shown in Table 1, NVA, a vinyl monomer, water (400 g) as a solvent, and 2,2'-azobis (2-amidinopropane) dihydrochloride (0.10 g) as a polymerization initiator were reacted and post-treated in a manner similar to those in Preparation Examples 1 to 3 to obtain a water-soluble copolymer in a yield shown in Table 1.

Preparation Examples 7 and 8

Under the conditions shown in Table 1, NVA, one of vinyl monomers, water (400 g) as a solvent, and potassium persulfate (0.20 g) and sodium hydrogen sulfide (0.40 g) as a polymerization initiator were reacted and post-treated in a manner similar to those in Preparation Examples 1 to 3. Thus, water-soluble copolymers were obtained in yields shown in Table 1, respectively.

Preparation Examples 9 and 10

Under the conditions shown in Table 1, NVA, one of vinyl monomers, dioxane (400 g) as a solvent, and lauroyl peroxide (0.50 g) as a polymerization initiator were reacted and post-treated in a manner similar to that in Preparation Example 4. Thus, water-soluble copolymers were obtained in yields shown in Table 1, respectively.

Preparation Examples 11 to 16

Under the conditions shown in Table 1, NVA, one of vinyl monomers, water (400 g) as a solvent, and 2,2'-azobis(2-amidinopropane) dihydrochloride (0.10 g) as a polymerization initiator were reacted and post-treated in a manner similar to those in Preparation Examples 1 to 3. Thus, water-soluble copolymers were obtained in yields shown in Table 1, respectively.

Preparation Examples 17 to 21

Under the conditions shown in Table 1, NVA, one of vinyl monomers, water (300 g) and dioxane (100 g) as a solvent, and 2,2'-azobis(2-amidinopropane) dihydrochloride (0.10 g) as a polymerization initiator were reacted and post-treated in a manner similar to those in Preparation Examples 1 to 3. Thus, water-soluble copolymers were obtained in yields shown in Table 1, respectively.

Preparation Examples 22, 33, and 35 to 39

Under the conditions shown in Table 1, NVA, one of vinyl monomers, water (300 g) and dioxane (100 g) as a solvent, and 2,2'-azobis(2-amidinopropane) dihydrochloride (0.10 g) as a polymerization initiator were reacted and post-treated in a manner similar to those in Preparation Examples 1 to 3. Thus, water-soluble copolymers were obtained in yields shown in Table 1, respectively.

Preparation Examples 23, 26, 31, 32, and 34

Under the conditions shown in Table 1, NVA, one of vinyl monomers, water (400 g) as a solvent, and 2,2'-azobis(2-amidinopropane) dihydrochloride (0.10 g) as a polymerization initiator were reacted and post-treated in a manner similar to those in Preparation Examples 1 to 3. Thus, water-soluble copolymers were obtained in yields shown in Table 1, respectively.

Preparation Examples 24 and 25

Under the conditions shown in Table 1, NVA, one of vinyl monomers, dioxane (400 g) as a solvent, and 2,2'-azobisisobutyronitrile (0.10 g) as a polymerization initiator were reacted and post-treated in a manner similar to that in Preparation Example 4. Thus, water-soluble copolymers were obtained in yields shown in Table 1, respectively.

Preparation Examples 27 and 28

Under the conditions shown in Table 1, NVA, one of vinyl monomers, water (400 g) as a solvent, were charged in a 1 liter four-necked flask equipped with a stirrer, a nitrogen gas inlet pipe, and a condenser. In a nitrogen gas atmosphere, potassium persulfate (0.20 g) and sodium hydrogen sulfide (0.40 g) as a polymerization initiator were added, and the temperature was elevated to 45°C. Polymerization was allowed to proceed at that temperature for a predetermined time, and then the reaction mixture was allowed to cool. To the resulting gel-like polymerizate was added about 2 liters of water to dissolve it. The solution thus obtained was poured in about 10 liters of acetone to precipitate and purify the copolymer, which was then dried to obtain water-soluble polymers in yields shown in Table 1, respectively.

Preparation Examples 29 and 30

Under the conditions shown in Table 1, NVA, one of vinyl monomers, dioxane (400 g) as a solvent, and lauroyl peroxide (0.50 g) as a polymerization initiator were reacted and post-treated in a manner similar to that in Preparation Example 4. The reaction time was 5 hours. As a result, water-soluble copolymers were obtained in yields shown in Table 1, respectively.

Reference Preparation Example 1

In a manner similar to that in Preparation Examples 23, 26, 31, 32 and 34, NVA was polymerized under the conditions shown in Table 1 to obtain a homopolymer of NVA in a yield shown in Table 1.

Reference Preparation Example 2

In a manner similar to that in Preparation Examples 24 and 25, NVA was polymerized under the conditions shown in Table 1 to obtain a homopolymer of NVA in a yield shown in Table 1.

Reference Preparation Example 3

NVA (50 g), water (150 g), and hydroxyethylcellulose (1.0 g) as a dispersion aid were charged for dissolution in a 1 liter four-necked flask equipped with a stirrer, a nitrogen gas inlet pipe, and a condenser. To this was added 200 g of heptane having dissolved therein 1.0 g of LEODOR SP-S10 (Kao Co., Ltd.) while stirring to disperse NVA aqueous solution. In a nitrogen gas atmosphere, 2,2'-azobis(N,N'-dimethyleneisobutylamidine) dihydrochloride (0.05 g) as a polymerization initiator was added thereto and polymerization was started at 35°C. After 6 hours' polymerization, the reaction mixture was allowed to cool, the resulting polymerizate was filtered and dried to obtain 47 g of NVA homopolymer.

Comparative Preparation Example 1-4

Under the conditions shown in Table 1, NVA, one of vinyl monomers, and dioxane (400 g) as a solvent were charged in a 1 liter four-necked flask equipped with a stirrer, a nitrogen gas inlet pipe, and a condenser. In a nitrogen gas atmosphere, benzoyl peroxide (0.10 g) as a polymerization initiator was added thereto and the temperature of the mixture was elevated to a predetermined temperature while stirring. Polymerization was allowed to proceed at that temperature for a predetermined time, and then the reaction mixture was allowed to cool to obtain a polymerizate, to which was added about 1 liter of methanol to dilute the polymerizate. Thereafter, the resulting solution was poured in about 10 liters of water to precipitate the copolymer. The copolymer thus obtained was redissolved in acetone, and poured into about 10 liters of a mixed solvent of hexane : acetone = 9 : 1 to precipitate and purify the copolymer. Thus, copolymers were obtained in yields shown in Table 1, respectively.

Comparative Preparation Example 5

Under the conditions shown in Table 1, NVA, one of vinyl monomers, dioxane (400 g) as a solvent, and 2,2'-azobisisobutyronitrile (0.30 g) as a polymerization initiator were reacted and post-treated in a manner similar to those in Comparative Preparation Examples 1 to 4. Thus, water-insoluble copolymers were obtained in yields shown in Table 1, respectively.

Comparative Preparation Example 6

Under the conditions shown in Table 1, NVA, a vinyl monomer, water (400 g) as a solvent, and potassium persulfate (0.50 g) and sodium hydrogen sulfide (1.0 g) as a polymerization initiator were reacted. The resulting polymer precipitated in water as the solvent to form a slurry. The slurry-like polymer was filtered and washed well with water, dried to obtain a copolymer in a yield shown in Table 1.

Comparative Preparation Examples 7 to 10

Under the conditions shown in Table 1, NVA, one of vinyl monomers, water (400 g) as a solvent, and 2,2'-azobis(2-amidinopropane) dihydrochloride (0.10 g) as a polymerization initiator were reacted and post-treated in a manner similar to those in Preparation Examples 1 to 3. Thus, water-soluble copolymers were obtained in yields shown in Table 1, respectively.

Table 1

| Run No. | Vinyl Monomer | Charge Amount of NVA/VM (g) | Solvent | Reaction Temperature (°C) | Reaction Time (hour) | Polymerization Initiator Kind | Polymerization Initiator Amount (g) | Yield (g) |
|---|---|---|---|---|---|---|---|---|
| Prep. Ex. 1 | MA | 55/45 | Water | 60 | 1 | A | 0.10 | 85 |
| Prep. Ex. 2 | MA | 70/30 | Water | 60 | 1 | A | 0.10 | 90 |
| Prep. Ex. 3 | MA | 90/10 | Water | 60 | 1 | A | 0.10 | 91 |
| Prep. Ex. 4 | BA | 90/10 | Dioxane | 83 | 5 | C | 0.10 | 54 |
| Prep. Ex. 5 | VA | 55/45 | Dioxane | 82 | 8 | D | 0.10 | 75 |
| Prep. Ex. 6 | VA | 70/30 | Water | 55 | 8 | A | 0.10 | 83 |
| Prep. Ex. 7 | AN | 70/30 | Water | 45 | 7 | E | 0.20/0.40 | 76 |
| Prep. Ex. 8 | AN | 90/10 | Water | 45 | 5 | E | 0.20/0.40 | 85 |
| Prep. Ex. 9 | BVE | 75/25 | Dioxane | 70 | 5 | B | 0.50 | 70 |
| Prep. Ex. 10 | BVE | 90/10 | Dioxane | 70 | 5 | B | 0.50 | 84 |
| Prep. Ex. 11 | DAA | 55/45 | Water | 43 | 1 | A | 0.10 | 80 |
| Prep. Ex. 12 | DAA | 70/30 | Water | 43 | 1 | A | 0.10 | 85 |
| Prep. Ex. 13 | DAA | 90/10 | Water | 43 | 1 | A | 0.10 | 92 |
| Prep. Ex. 14 | MVK | 55/45 | Water | 70 | 1 | A | 0.50 | 82 |
| Prep. Ex. 15 | MVK | 70/30 | Water | 70 | 1 | A | 0.50 | 86 |
| Prep. Ex. 16 | MVK | 90/10 | Water | 70 | 1 | A | 0.50 | 91 |
| Prep. Ex. 17 | MPGA | 60/40 | Water/Dioxane | 58 | 4 | A | 0.10 | 92 |
| Prep. Ex. 18 | EEGA | 40/60 | Water/Dioxane | 59 | 3 | A | 0.10 | 87 |
| Prep. Ex. 19 | MA<br>2MEA | 40/30<br>/30 | Water/Dioxane | 58 | 3 | A | 0.10 | 87 |
| Prep. Ex. 20 | MA<br>PEGA | 40/30<br>/30 | Water/Dioxane | 60 | 3 | A | 0.10 | 84 |
| Prep. Ex. 21 | PEGM | 70/30 | Water/Dioxane | 59 | 3 | A | 0.10 | 88 |

Table 1 (Continued)

| Run No. | Vinyl Monomer | Charge Amount of NVA/VM (g) | Solvent | Reaction Temperature (°C) | Reaction Time (hour) | Polymerization Initiator Kind | Polymerization Initiator Amount (g) | Yield (g) |
|---|---|---|---|---|---|---|---|---|
| Prep. Ex. 22 | MA | 40/60 | Water/Dioxane | 60 | 1 | A | 0.10 | 85 |
| Prep. Ex. 23 | MA | 90/10 | Water | 60 | 1 | A | 0.10 | 91 |
| Prep. Ex. 24 | BA | 90/10 | Dioxane | 83 | 5 | D | 0.10 | 54 |
| Prep. Ex. 25 | VA | 55/45 | Dioxane | 82 | 8 | D | 0.10 | 75 |
| Prep. Ex. 26 | VA | 90/10 | Water | 62 | 8 | A | 0.10 | 83 |
| Prep. Ex. 27 | AN | 70/30 | Water | 45 | 7 | E | 0.20/0.40 | 76 |
| Prep. Ex. 28 | AN | 90/10 | Water | 45 | 5 | E | 0.20/0.40 | 85 |
| Prep. Ex. 29 | BVE | 75/25 | Dioxane | 70 | 5 | B | 0.50 | 70 |
| Prep. Ex. 30 | BVE | 90/10 | Dioxane | 70 | 5 | B | 0.50 | 84 |
| Prep. Ex. 31 | DAA | 40/60 | Water | 43 | 1 | A | 0.10 | 80 |
| Prep. Ex. 32 | DAA | 90/10 | Water | 43 | 1 | A | 0.10 | 92 |
| Prep. Ex. 33 | MVK | 40/60 | Water/Dioxane | 70 | 1 | A | 0.10 | 86 |
| Prep. Ex. 34 | MVK | 90/10 | Water | 70 | 1 | A | 0.10 | 90 |
| Prep. Ex. 35 | MPGA | 70/30 | Water/Dioxane | 58 | 4 | A | 0.10 | 92 |
| Prep. Ex. 36 | EEGA | 70/30 | Water/Dioxane | 57 | 3 | A | 0.10 | 91 |
| Prep. Ex. 37 | MA 2MEA | 60/20 /20 | Water/Dioxane | 58 | 3 | A | 0.10 | 93 |
| Prep. Ex. 38 | MA PEGA | 60/20 /20 | Water/Dioxane | 59 | 3 | A | 0.10 | 87 |
| Prep. Ex. 39 | PEGM | 70/30 | Water/Dioxane | 59 | 3 | A | 0.10 | 90 |

Table 1 (Continued)

| Run No. | Vinyl Monomer | Charge Amount of NVA/VM (g) | Solvent | Reaction Temperature (°C) | Reaction Time (hour) | Polymerization Initiator Kind | Polymerization Initiator Amount (g) | Yield (g) |
|---|---|---|---|---|---|---|---|---|
| C. Prep. Ex. 1 | BA | 50/50 | Dioxane | 80 | 5 | C | 0.10 | 67 |
| C. Prep. Ex. 2 | BA | 70/30 | Dioxane | 75 | 5 | C | 0.10 | 58 |
| C. Prep. Ex. 3 | EHA | 90/10 | Dioxane | 81 | 5 | C | 0.10 | 52 |
| C. Prep. Ex. 4 | BM | 70/30 | Dioxane | 83 | 5 | C | 0.10 | 70 |
| C. Prep. Ex. 5 | VA | 10/90 | Dioxane | 85 | 8 | D | 0.30 | 56 |
| C. Prep. Ex. 6 | AN | 50/50 | Water | 24 | 2 | E | 0.5/0.10 | 75 |
| C. Prep. Ex. 7 | AA | 50/50 | Water | 60 | 1 | A | 0.10 | 90 |
| C. Prep. Ex. 8 | AA | 90/10 | Water | 60 | 1 | A | 0.10 | 92 |
| C. Prep. Ex. 9 | SA | 50/50 | Water | 53 | 1 | A | 0.10 | 86 |
| C. Prep. Ex. 10 | SA | 90/10 | Water | 55 | 1 | A | 0.10 | 91 |
| R. Prep. Ex. 1 | | 100/0 | Water | 61 | 3 | A | 0.10 | 93 |
| R. Prep. Ex. 2 | | 100/0 | Dioxane | 81 | 4 | D | 0.20 | 87 |
| R. Prep. Ex. 3 | | 100/0 | Water/Heptane | 35 | 6 | F | 0.05 | 47 |

In Table 1, symbols in the column of the polymerization initiator mean as follows.

A: 2,2'-azobis (2-amidinopropane) dihydrochloride
B: Lauroyl peroxide
C: Benzoyl peroxide
D: 2,2'-azobisisobutyronitrile
E: Potassium persulfate/sodium hydrogen sulfide
F: 2,2'-azobis(N,N'-dimethyleneisobutylamidine) dihydrochloride
MA: methyl acrylate; BA: n-butyl acrylate;
VA: vinyl acetate; AN: acrylonitrile;
BVE: n-butyl vinyl ether; DAA: N,N-dimethylacrylamide;
MVK: methyl vinyl ketone;
MPGA: methoxydipropylene glycol acrylate;
EEGA: ethoxydiethylene glycol acrylate;
2MEA: 2-methoxyethyl acrylate;
PEGA: polyethylene glycol acrylate;
PEGM: polyethylene glycol methacrylate;
NVA/VM: N-vinylacetamide/vinyl monomer;
EHA: 2-ethylhexyl acrylate: AA: Acrylamide;
SA: Sodium Acrylate;
Prep. Ex.: Preparation Example;
C. Prep. Ex.: Comparative Preparation Example;
R. Prep. Ex.: Reference Preparation Exmaple.

In addition, glass transition points of representative copolymers prepared in Preparation Examples (copolymers prepared in Preparation Examples 1, 2, 3, 5, 7, 10, 11 and 16) were measured by DSC (SSC.5200, Seiko Electronics Industry Co., Ltd.). Results obtained are shown in Table 2.

Table 2

| Run No. | Vinyl Monomer in Copolymer | Charge Amount of NVA/VM (g) | Glass Transition Temperature (°C) |
|---|---|---|---|
| Prep. Ex. 1 | Methyl Acrylate | 55/45 | 109 |
| Prep. Ex. 2 | Methyl Acrylate | 70/30 | 119 |
| Prep. Ex. 3 | Methyl Acrylate | 90/10 | 128 |
| Prep. Ex. 5 | Vinyl Acetate | 55/45 | 164 |
| Prep. Ex. 7 | Acrylonitrile | 70/30 | 155 |
| Prep. Ex. 10 | n-Butyl Vinyl Ether | 90/10 | 179 |
| Prep. Ex. 11 | N,N-Dimethylacrylamide | 55/45 | 164 |
| Prep. Ex. 16 | Methyl Vinyl Ketone | 90/10 | 165 |

<u>Comparative Preparation Example 11</u>

A sodium hydroxide/methanol solution was added to a 40 % methanol solution of corresponding polyvinyl acetate and saponification was allowed to proceed at 40°C to obtain polyvinyl alcohol having a degree of polymerization of 610 and a degree of saponification of 84 mole %.

<u>Comparative Preparation Example 12</u>

A sodium hydroxide/methanol solution was added to a 30 % methanol solution of corresponding polyvinyl acetate and saponification was allowed to proceed at 40°C to obtain polyvinyl alcohol having a degree of polymerization of 1590 and a degree of saponification of 90 mole %.

Comparative Preparation Example 13

A sodium hydroxide/methanol solution was added to a 40 % methanol solution of corresponding polyvinyl acetate and saponification was allowed to proceed at 40°C to obtain polyvinyl alcohol having a degree of polymerization of 610 and a degree of saponification of 90 mole %.

Comparative Preparation Example 14

A sodium hydroxide/methanol solution was added to a 40 % methanol solution of corresponding polyvinyl acetate and saponification was allowed to proceed at 40°C to obtain polyvinyl alcohol having a degree of polymerization of 1590 and a degree of saponification of 90 mole %.

Examples A-1 to A-21 and Comparative Examples A-1 to A-12

Copolymers obtained in Preparation Examples and Comparative Preparation Examples were molded into films by extrusion molding or casting, and their water solubility and heat sealing property were examined.

Extrusion Molding

Each of copolymers obtained in Preparation Examples 1 to 21 (1 kg) was melt-molded at a temperature of 200 to 300°C using an extruder and pelletized using a pelletizer. The pellets obtained were molded at a temperature of 200 to 300°C using a T-die molding machine to obtain films of 30 μm thick, respectively.

Film formation by casting

Each of copolymers prepared in Comparative Preparation Examples 1 to 10 was dissolved in methanol or water in a concentration of 5 %, and the solution was cast to obtain a film of about 30 μm thick. Polyvinyl alcohols obtained in Comparative Preparation Examples 11 and 12 were adjusted to give 15 % aqueous solutions, followed by casting to obtain films of about 30 μm thick, respectively.

Evaluation Methods

(a) Water solubility test

Films prepared in Examples 1 to 21 and Comparative Examples 1 to 12 and stored at a temperature of 20°C and a relative humidity (RH) of 60 % for 3 months were sandwiched between two sheets of paperboard having perforations of 3x3 cm, which were fixed by a stapler. This was dipped in distilled water at 20°C to test the dissolution state of films. Results obtained are shown in Table 3. In Table 3, symbol "O" indicates that the film was dissolved completely while symbol "x" means that undissolved portion remained.

(b) Heat-sealability test

Films obtained in Examples 1 to 21 and Comparative Examples 1 to 12 each having a size of 5x5 cm were moisture-conditioned at 60 % RH for one night. Then, two sheets of the same film were superimposed one on another and heat sealed together using a heat sealer at 160°C for 1 second. Results obtained are shown in Table 3.
In Table 3, abbreviations in the column mean as follows.

MA: methyl acrylate; BA: n-butyl acrylate;
VA: vinyl acetate; AN: acrylonitrile;
BVE: n-butyl vinyl ether; DAA: N,N-dimethylacrylamide;
MVK: methyl vinyl ketone;
MPGA: methoxydipropylene glycol acrylate;
EEGA: ethoxydiethylene glycol acrylate;
2MEA: 2-methoxyethyl acrylate;
PEGA: polyethylene glycol acrylate;
PEGM: polyethylene glycol methacrylate;
EHA: 2-ethylhexyl acrylate;
AA: Acrylamide; SA: Sodium Acrylate;

PVA-1: polyvinyl alcohol (degree of saponification: 84 mole %; degree of polymerization: 610);
PVA-2: polyvinyl alcohol (degree of saponification: 90 mole %; degree of polymerization:1590);
NVA/VM: N-vinylacetamide/vinyl monomer;
Ex.: Example; C. Ex.: Comparative Example;
Prep.Ex.: Preparation Example;
C.Prep.Ex.: Comparative Preparation Example.

Table 3

| Run No. | Copolymer Obtained in | Vinyl Monomer in Copolymer | Charge Amount of NVA/VM (g) | Water Solubility Test | Heat Sealability |
|---|---|---|---|---|---|
| Ex. A-1 | Prep. Ex. 1 | MA | 55/45 | O | O |
| Ex. A-2 | Prep. Ex. 2 | MA | 70/30 | O | O |
| Ex. A-3 | Prep. Ex. 3 | MA | 90/10 | O | O |
| Ex. A-4 | Prep. Ex. 4 | BA | 90/10 | O | O |
| Ex. A-5 | Prep. Ex. 5 | VA | 55/45 | O | O |
| Ex. A-6 | Prep. Ex. 6 | VA | 70/30 | O | O |
| Ex. A-7 | Prep. Ex. 7 | AN | 70/30 | O | O |
| Ex. A-8 | Prep. Ex. 8 | AN | 90/10 | O | O |
| Ex. A-9 | Prep. Ex. 9 | BVE | 75/25 | O | O |
| Ex. A-10 | Prep. Ex. 10 | BVE | 90/10 | O | O |
| Ex. A-11 | Prep. Ex. 11 | DAA | 55/45 | O | O |
| Ex. A-12 | Prep. Ex. 12 | DAA | 70/30 | O | O |
| Ex. A-13 | Prep. Ex. 13 | DAA | 90/10 | O | O |
| Ex. A-14 | Prep. Ex. 14 | MVK | 55/45 | O | O |
| Ex. A-15 | Prep. Ex. 15 | MVK | 70/30 | O | O |
| Ex. A-16 | Prep. Ex. 16 | MVK | 90/10 | O | O |
| Ex. A-17 | Prep. Ex. 17 | MPGA | 60/40 | O | O |
| Ex. A-18 | Prep. Ex. 18 | EEGA | 40/60 | O | O |
| Ex. A-19 | Prep. Ex. 19 | MA<br>2MEA | 40/30<br>/30 | O | O |
| Ex. A-20 | Prep. Ex. 20 | MA<br>PEGA | 40/30<br>/30 | O | O |
| Ex. A-21 | Prep. Ex. 21 | PEGM | 70/30 | O | O |

Table 3 (Continued)

| Run No. | Copolymer Obtained in | Vinyl Monomer in Copolymer | Charge Amount of NVA/VM (g) | Water Solubility Test | Heat Sealability |
|---|---|---|---|---|---|
| C.Ex. A-1 | C.Prep.Ex. 1 | BA | 50/50 | X | - |
| C.Ex. A-2 | C.Prep.Ex. 2 | BA | 70/30 | X | - |
| C.Ex. A-3 | C.Prep.Ex. 3 | EHA | 90/10 | X | - |
| C.Ex. A-4 | C.Prep.Ex. 4 | BM | 70/30 | X | - |
| C.Ex. A-5 | C.Prep.Ex. 5 | VA | 10/90 | X | - |
| C.Ex. A-6 | C.Prep.Ex. 6 | AN | 50/50 | X | - |
| C.Ex. A-7 | C.Prep.Ex. 7 | AA | 50/50 | O | X |
| C.Ex. A-8 | C.Prep.Ex. 8 | AA | 90/10 | O | X |
| C.Ex. A-9 | C.Prep.Ex. 9 | SA | 50/50 | O | X |
| C.Ex. A-10 | C.Prep.Ex. 10 | SA | 90/10 | O | X |
| C.Ex. A-11 | C.Prep.Ex. 11 | PVA-1 | | X | - |
| C.Ex. A-12 | C.Prep.Ex. 12 | PVA-2 | | X | - |

Note: O: good sealability; X: sealed portion peeled off readily; -: no test

Examples B-1 to B-21 and Comparative Examples B-1 to B-10 Molding of sample films

A composition of 100 parts by weight of a copolymer obtained in one of Preparation Examples 1 to 21, and a plasticizer shown in Table 4A was melt-extruded at a temperature of 150 to 280°C using an extruder, and then

pelletized using a pelletizer. The pellets obtained were molded at a temperature of 150 to 280°C using a T-die molding machine. Thus, films of a predetermined thickness (30 µm or 18 µm) were obtained. These were named Sample Films 1 to 21.

On the other hand, copolymers of Preparation Examples 22 to 39 and homopolymers of Reference Preparation Examples 1 to 3 were molded similarly to those of Preparation Examples 1 to 21 using plasticizers shown in Table 4B except that the temperatures at the melt-extrusion step and that at the molding using a T-die molding machine were changed to 200 to 280°C, respectively. Films obtained were named Sample Films 22 to 42.

Molding of comparative sample films

(i) a composition of 100 parts by weight of polyvinyl alcohol obtained in one of Comparative Examples 11 and 12 and a plasticizer shown in Table 4C was diluted with water to a solids content of 15 %, and then cast into a film of 30 µm thick (Comparative Sample Film A or B).
(ii) a composition of 100 parts by weight of polyvinyl alcohol obtained in one of Comparative Preparation Examples 13 and 14, and a plasticizer shown in Table 4D was diluted with water to a solids content of 10 %, and then cast into a film of 30 µm thick (Comparative Sample Film C to J).
(iii) a copolymer or a homopolymer obtained in one of Preparation Examples 22 to 39 and Reference Preparation Examples 1 to 3 was melt-extruded at a temperature of 200 to 300°C using an extruder, and then pelletized using a pellitizer. The pellets obtained were molded at a temperature of 200 to 300°C using a T-die molding machime. Thus, films of a predetermined thickness (30 µm) were obtained. These were named Comparative Sample Films 22 to 42.

In Table 4A, 4B, 4C and 4D, symbols in the column mean as follows.

SF: sample film; CSF: comparative sample film;
Ex.: Example; C.Ex.: Comparative Example;
Prep.Ex.: Preparation Example;
R.Prep.Ex.: Reference Preparation Example;
C. Prep. Ex.: Comparative Preparation Example;
G: glycerol; TEG: triethylene glycol;
TMP: trimethylolpropane; PEG: polyethylene glycol;
PEGME: polyethylene glycol monomethyl ether;
PEGPGE: polyethylene glycol polypropylene glycol ether;
PEGLE: polyethylene glycol lauryl ether;
PEGML: polyethylene glycol monolaurate;
PPG: polypropylene glycol;
PEGTGE: polyethylene glycol triglyceryl ether.

Table 4A

| Run No. | Film | Copolymer: Obtained in | Copolymer: Charge Amount (wt. part) | Plasticizer: Kind | Plasticizer: Charge Amount (wt. part) |
|---|---|---|---|---|---|
| Ex. B-1 | SF 1 | Prep. Ex. 1 | 100 | G | 5.0 |
| Ex. B-2 | SF 2 | Prep. Ex. 2 | 100 | G | 6.0 |
| Ex. B-3 | SF 3 | Prep. Ex. 3 | 100 | G | 7.0 |
| Ex. B-4 | SF 4 | Prep. Ex. 4 | 100 | G | 7.0 |
| Ex. B-5 | SF 5 | Prep. Ex. 5 | 100 | G | 5.0 |
| Ex. B-6 | SF 6 | Prep. Ex. 6 | 100 | G | 7.0 |
| Ex. B-7 | SF 7 | Prep. Ex. 7 | 100 | TEG | 7.0 |
| Ex. B-8 | SF 8 | Prep. Ex. 8 | 100 | TEG | 9.0 |
| Ex. B-9 | SF 9 | Prep. Ex. 9 | 100 | TEG | 4.0 |
| Ex. B-10 | SF 10 | Prep. Ex. 10 | 100 | TEG | 6.0 |
| Ex. B-11 | SF 11 | Prep. Ex. 11 | 100 | TMP | 5.0 |
| Ex. B-12 | SF 12 | Prep. Ex. 12 | 100 | TMP | 7.0 |
| Ex. B-13 | SF 13 | Prep. Ex. 13 | 100 | TMP | 9.0 |
| Ex. B-14 | SF 14 | Prep. Ex. 14 | 100 | TMP | 5.0 |
| Ex. B-15 | SF 15 | Prep. Ex. 15 | 100 | TMP | 7.0 |
| Ex. B-16 | SF 16 | Prep. Ex. 16 | 100 | TMP | 9.0 |
| Ex. B-17 | SF 17 | Prep. Ex. 17 | 100 | PEG*1 | 3.0 |
| Ex. B-18 | SF 18 | Prep. Ex. 18 | 100 | PEG*1 | 3.0 |
| Ex. B-19 | SF 19 | Prep. Ex. 19 | 100 | PEG*1 | 3.0 |
| Ex. B-20 | SF 20 | Prep. Ex. 20 | 100 | PEG*1 | 3.0 |
| Ex. B-21 | SF 21 | Prep. Ex. 21 | 100 | PEG*1 | 3.0 |

Table 4B

| Run No. | Film | Copolymer: Obtained in | Copolymer: Charge Amount (wt. part) | Plasticizer: Kind | Plasticizer: Charge Amount (wt. part) |
|---|---|---|---|---|---|
| Ex. B-22 | SF 22 | Prep. Ex. 22 | 100 | PEG*1 | 5.0 |
| Ex. B-23 | SF 23 | Prep. Ex. 23 | 100 | PEG*1 | 7.0 |
| Ex. B-24 | SF 24 | Prep. Ex. 24 | 100 | PEG*1 | 7.0 |
| Ex. B-25 | SF 25 | Prep. Ex. 25 | 100 | PEGME*2 | 5.0 |
| Ex. B-26 | SF 26 | Prep. Ex. 26 | 100 | PEGME*2 | 7.0 |
| Ex. B-27 | SF 27 | Prep. Ex. 27 | 100 | PEGPGE*3 | 7.0 |
| Ex. B-28 | SF 28 | Prep. Ex. 28 | 100 | PEGPGE*3 | 9.0 |
| Ex. B-29 | SF 29 | Prep. Ex. 29 | 100 | PEGLE*4 | 4.0 |
| Ex. B-30 | SF 30 | Prep. Ex. 30 | 100 | PEGML*5 | 6.0 |
| Ex. B-31 | SF 31 | Prep. Ex. 31 | 100 | PPG*6 | 5.0 |
| Ex. B-32 | SF 32 | Prep. Ex. 32 | 100 | PPG*6 | 9.0 |
| Ex. B-33 | SF 33 | Prep. Ex. 33 | 100 | PEGTGE*7 | 5.0 |
| Ex. B-34 | SF 34 | Prep. Ex. 34 | 100 | PEGTGE*7 | 9.0 |
| Ex. B-35 | SF 35 | Prep. Ex. 35 | 100 | PEG*8 | 4.0 |
| Ex. B-36 | SF 36 | Prep. Ex. 36 | 100 | PEG*8 | 4.0 |
| Ex. B-37 | SF 37 | Prep. Ex. 37 | 100 | PEG*1 | 5.0 |
| Ex. B-38 | SF 38 | Prep. Ex. 38 | 100 | PEG*1 | 6.0 |
| Ex. B-39 | SF 39 | Prep. Ex. 39 | 100 | PEG*1 | 6.0 |
| Ex. B-40 | SF 40 | R.Prep. Ex. 1 | 100 | PEGME*2 | 10.0 |
| Ex. B-41 | SF 41 | R.Prep. Ex. 2 | 100 | PEGME*2 | 10.0 |
| Ex. B-42 | SF 42 | R.Prep. Ex. 3 | 100 | PEGME*2 | 10.0 |

Table 4C

| Run No. | Film | Copolymer: Obtained in | Copolymer: Charge Amount (wt. part) | Plasticizer: Kind | Plasticizer: Charge Amount (wt. part) |
|---|---|---|---|---|---|
| C.Ex. B-1 | CSF A | C.Prep. Ex. 11 | 100 | G | 5.0 |
| C.Ex. B-2 | CSF B | C.Prep. Ex. 12 | 100 | G | 6.0 |

Table 4D

| Run No. | Film | Copolymer: Obtained in | Copolymer: Charge Amount (wt. part) | Plasticizer: Kind | Plasticizer: Charge Amount (wt. part) |
|---|---|---|---|---|---|
| C.Ex. B-13 | CSF C | C.Prep. Ex. 13 | 100 (Solid Contents) | PEG*1 | 15 |
| C.Ex. B-14 | CSF D | C.Prep. Ex. 14 | 100 (Solid Contents) | PEG*1 | 15 |
| C.Ex. B-15 | CSF E | Prep. Ex. 22 | 100 | G | 5 |
| C.Ex. B-16 | CSF F | Prep. Ex. 25 | 100 | G | 5 |
| C.Ex. B-17 | CSF G | Prep. Ex. 29 | 100 | G | 4 |
| C.Ex. B-18 | CSF H | Prep. Ex. 33 | 100 | TMP | 5 |
| C.Ex. B-19 | CSF I | Prep. Ex. 36 | 100 | TMP | 4 |
| C.Ex. B-20 | CSF J | Prep. Ex. 38 | 100 | TMP | 6 |

Notes:

*1) PEG400; *2) UNIOX M-400; *3) UNILUB 80DE-40U; *4) NONION K-204;
*5) NONION L-2; *6) UNIOL D-400; *7)UNIOX G-450; *8)PEG600
These plasticizers were available from Nippon Oils & Fats Co., Ltd.

(a) Water solubility test

Sample Films 22 to 42, Comparative Sample Films 22 to 42 and Comparative Sample Films C and D which were prepared in Examples B-22 to B-42 and Comparative Examples B-13 to B-14 and stored at a temperature of 20°C and a relative humidity (RH) of 60 % for 3 months, were cut into pieces of a size of 2x2 cm and poured into 200 ml of tap water at 20°C. While stirring mildly with a magnetic stirrer, time required for complete dissolution of the film pieces were measured. Results obtained are shown in Table 5.

Table 5

| Film | Heat Sealability Test | Cold Water Dissolution Speed (minute) | Film | Heat Sealability Test | Cold Water Dissolution Speed (minute) |
|---|---|---|---|---|---|
| SF 22 | O | 2-4 | CSF 22 | Δ | 4-6 |
| SF 23 | O | 2-3 | CSF 23 | X | 4-5 |
| SF 24 | O | ≦ 0.5 | CSF 24 | X | 0.5-1.0 |
| SF 25 | O | ≦ 0.5 | CSF 25 | X | 0.5-1.0 |
| SF 26 | O | 1-2 | CSF 26 | X | 3-4 |
| SF 27 | O | 2-4 | CSF 27 | X | 5-6 |
| SF 28 | O | 2-3 | CSF 28 | X | 5-7 |
| SF 29 | O | ≦ 0.5 | CSF 29 | Δ | 0.5-1.0 |
| SF 30 | O | ≦ 0.5 | CSF 30 | X | 0.5-1.0 |
| SF 31 | O | 2-3 | CSF 31 | X | 5-6 |
| SF 32 | O | 3-4 | CSF 32 | X | 5-6 |
| SF 33 | O | 2-4 | CSF 33 | X | 4-6 |
| SF 34 | O | 1-2 | CSF 34 | X | 4-5 |
| SF 35 | O | 1-2 | CSF 35 | Δ | 4-5 |
| SF 36 | O | 2-3 | CSF 36 | Δ | 4-5 |
| SF 37 | O | 2-3 | CSF 37 | Δ | 5-6 |
| SF 38 | O | 3-4 | CSF 38 | Δ | 5-6 |
| SF 39 | O | 2-3 | CSF 39 | Δ | 5-7 |
| SF 40 | O | 2-3 | CSF 40 | X | 4-6 |
| SF 41 | O | ≦ 0.5 | CSF 41 | X | 0.5-1.0 |
| SF 42 | O | 4-5 | CSF 42 | X | 7-9 |
| | | | CSF C | X | not dissolve |
| | | | CSF D | X | not dissolve |

Notes: O: good bonding; D: bonded but peeled off readily; X: no bonding

(b) Heat sealability test

Sample Films 22 to 42, Comparative Sample Films 22 to 42 and Comparative Sample Films C and D prepared

in Examples B-22 to B-42 and Comparative Examples B-13 and B-14 were treated in the same manner as in the case of Sample Films 1-21 except that the temperature of the heat sealer was changed to 80°C. Results obtained are shown in Table 5 above.

(c) Anti-Blocking property test

Two sheets of the same film selected from Sample Films 22, 25, 29, 33, 36 and 38, and Comparative Sample Films E to J each having a size of 1.5x10 cm were superimposed one on another and paper was inserted through one end of the superimposed sheets such that the area of the paper inserted became half the area of the area of superimposition of the two sheets to prevent blocking. This film was left to stand in an atmosphere of 20°C and 65 % RH under a contact pressure of 70 kg/cm$^2$ for 24 hours. Thereafter, samples were taken out and the portion of the film where the paper was sandwiched was drawn to see if adhesion occurred. Results obtained are shown in Table 6.

Table 6

| Film | Antiblocking Test |
|---|---|
| SF 22 | O |
| SF 25 | O |
| SF 29 | O |
| SF 33 | O |
| SF 36 | O |
| SF 38 | O |
| CSF E | x |
| CSF F | x |
| CSF G | x |
| CSF H | x |
| CSF I | x |
| CSF J | x |

Notes: O: No film adhesion
x: Film adhesion

Use Example 1: Water-soluble packaging material for detergents

Tests on water solubility of packaging materials

Powder detergent (ATTACK, trademark for a product by Kao Co., Ltd.) (1 g) was packaged with one of Sample Films 2, 4, 5, 7, 9, 11, 14, 18, 20, 21, 23, 24, 25, 29, 31, 34, 35, 37, and 41 (30 μm), and Comparative Sample Films A, B, C and D to a size of 4x4 cm using a heat sealer to prepare unit packaged detergents. Using the unit packaged detergents, the following tests were conducted.

After storing the unit packaged detergents in an incubator at 20°C and RH 60 % for 3 months, the contents were taken out. The packaging materials were each put in 3 liters of tap water (15°C) slowly stirred using a magnetic stirrer, and after 10 minutes presence of an undissolved portion was judged by viewing. Results obtained are shown in Table 7.

Tests on solubility of unit packaged detergent

Powder detergent (ATTACK, trademark for a product by Kao Co., Ltd.) (20 g) was packaged with one of Sample Films 2, 4, 5, 7, 9, 11, 14, 18, 20, 21, 23, 24, 25, 29, 31, 34, 35, 37, and 41 (30 μm), and Comparative Sample Films A, B, C and D to a size of 4x4 cm using a heat sealer to prepare unit packaged detergents. Using the unit packaged detergents, solubility of the packaged detergent was tested. Test were conducted by charging 30 liters of tap water at 15°C in an electric washing machine (SHIZUKA GOZEN, trademark for a product manufactured by Hitachi Limited), putting the above-mentioned unit packaged detergent, stirring for 5 minutes in a weak-turn over mode, discharging water, and then dipping up foams, followed by judgement by viewing. Results obtained are shown in Table 7.

Table 7

| Film | Water Solubility Test on Packaging Material1) | Solubility Test on Unit Packaged Detergent2) |
|---|---|---|
| SF 2 | O | O |
| SF 4 | O | O |
| SF 5 | O | O |
| SF 7 | O | O |
| SF 9 | O | O |
| SF 11 | O | O |
| SF 14 | O | O |
| SF 18 | O | O |
| SF 20 | O | O |
| SF 21 | O | O |
| SF 23 | O | O |
| SF 24 | O | O |
| SF 25 | O | O |
| SF 29 | O | O |
| SF 31 | O | O |
| SF 34 | O | O |
| SF 35 | O | O |
| SF 37 | O | O |
| SF 41 | O | O |
| CSF A | x | - |
| CSF B | x | - |
| CSF C | x | - |
| CSF D | x | - |

Notes:
1) O: Complete dissolution
Δ: Small amount of undissolved portion remained
x: Large amount of undissolved portion remained
2) O: No detergent remained
Δ: Small amount of detergent remained
x: Large amount of detergent remained
-: No test
SF: Sample film
CF: Comparative sample film

Use Example 2: Water soluble packaging material for agricultural chemicals

Commercially available agricultural chemical, wettable composition of simazine [2-chloro-4,6--bis(ethylamino)-1,3,5-triazine] (2 g) was packaged with one of Sample Films 1, 3, 4, 6, 8, 10, 12, 15, 16, 17, 21, 22, 27, 30, 32, 33, 36, 39, and 40 (30 μm), and Comparative Sample Films A, B, C and D to a size of 6x3 cm using a heat sealer to prepare packaged agricultural chemicals.

Also, commercially available wettable composition of MANZEBU (zinc-coordinated manganese ethylenebisdithiocarbamate) (2 g) was packaged similarly to prepare packaged agricultural chemicals.

After storing the packaged agricultural chemicals in an incubator at 20°C and RH 60 % for 3 months, the contents, i.e., commercially available simazine wettable composition and MANZEBU wettable composition were taken out. The packaging materials or films were each put in 1 liter of water (15°C) having slowly stirred using a magnetic stirrer, and after 10 minutes presence of an undissolved portion was judged by viewing. Results obtained are shown in Table 8.

Table 8

| Film | SIMAZINE Wettable Composition | MANZEBU Wettable Composition |
|---|---|---|
| SF 1 | O | O |
| SF 3 | O | O |

Table 8 (continued)

| Film | SIMAZINE Wettable Composition | MANZEBU Wettable Composition |
|---|---|---|
| SF 4 | O | O |
| SF 6 | O | O |
| SF 8 | O | O |
| SF 10 | O | O |
| SF 12 | O | O |
| SF 15 | O | O |
| SF 16 | O | O |
| SF 17 | O | O |
| SF 21 | O | O |
| SF 22 | O | O |
| SF 27 | O | O |
| SF 30 | O | O |
| SF 32 | O | O |
| SF 33 | O | O |
| SF 36 | O | O |
| SF 39 | O | O |
| SF 40 | O | O |
| CSF A | x | x |
| CSF B | x | x |
| CSF C | x | x |
| CSF D | x | x |

Notes: O: Complete dissolution
Δ: Small amount of undissolved portion remained
x: Large amount of undissolved portion remained
SF: Sample film
CSF: Comparative sample film

Use Example 3: Seed tape base

Between two sheets of one of Sample Films 2, 6, 10, 26, 36, and 38 (18 μm) each adjusted to a size of 25 m long and 3 cm wide were arranged one after another 100 radish seeds at a distance of 25 cm and melt-fixed to prepare a seed tape. This seed tape was sown in a test farm and germination rate of radish seed was examined seven days after the sowing. As a control, 100 radish seeds were sown one after another at a distance of 25 cm without using the seed tape (control lot), and germination rate was compared to examine influence of water-soluble tape on germination.

Further, rate of growth of root of radish 67 days after the sowing was compared. Results obtained are shown in Table 9. In Table 9, germination rate was calculated by the following equation:

$$\text{Germination Rate (\%)} = \frac{\text{Number of seeds which germinated}}{\text{Number of seeds sown}} \times 100$$

Table 9

| Film | Germination Rate (%) | Growth (cm) |
|---|---|---|
| SF 2 | 95 | 42.1 |
| SF 6 | 96 | 43.4 |
| SF 10 | 94 | 41.8 |
| SF 26 | 93 | 43.2 |
| SF 36 | 96 | 45.0 |
| SF 38 | 95 | 44.9 |
| Control | 96 | 43.2 |
| Control | 95 | 45.1 |

Use Example 4: Sheet for transfer printing

On each of Sample Films 3, 4, 11, 16, 24, 25, 29, and 42 (30 μm) adjusted to a size of 20x20 cm was printed a desired pattern using oily thermoplastic ink (black) to prepare transfer sheets. These transfer sheets were placed on paper sheets so that printed surfaces were in contact with paper sheets. Then the paper sheets were put on a heat plate at 80°C with paper surface down, and the printed surfaces were pressed down lightly two or three times by hand from above to have the films adhered closely to the paper sheets. These were dipped in 5 liters of tap water at 30°C for 3 hours, and then taken out. After washing with water, transferability was examined by viewing. Results obtained are shown in Table 10.

Table 10

| Film | Result |
|---|---|
| SF 3 | O |
| SF 4 | O |
| SF 11 | O |
| SF 16 | O |
| SF 24 | O |
| SF 25 | O |
| SF 29 | O |
| SF 42 | O |
| Notes: O: Transferability good<br>x: Transfer impossible (inclusive of cases where no dissolution of film occurred) | |

**Claims**

1. A water-soluble thermoplastic film comprising:

a copolymer comprising 35 to 95 % by weight of N-vinylacetamide, 5 to 65 % by weight of a vinyl monomer other than N-vinylacetamide, and 0.5 to 30 parts by weight per 100 parts by weight of said copolymer, of a water-solubleplasticizer having a polyoxyalkylene group, wherein said vinyl monomer is at least one compound selected from the group consisting of:

compounds represented by general formula (I):

$$CH_2=CH-O-CO-R_1 \qquad (I)$$

wherein $R_1$ is a $C_1$-$C_4$ lower alkyl group;

compounds represented by general formula (II):

$$CH_2=C(R_2)-COO-R_3 \qquad (II)$$

wherein $R_2$ is a hydrogen atom or a methyl group; $R_3$ is a $C_1$-$C_4$ lower alkyl group;

compounds represented by general formula (III):

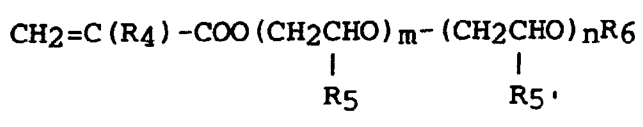

(III)

wherein $R_4$, $R_5$ and $R_{5'}$ each are a hydrogen atom or a methyl group; $R_6$ is a hydrogen atom, a $C_1$-$C_4$ lower alkyl group, or a phenyl group; m and n are zero or an integer of 1 to 100 provided that m and n are not zero simultaneously;

compounds represented by general formula (IV):

$$CH_2=CH\text{-}CO\text{-}R_7 \qquad (IV)$$

wherein $R_7$ is a $C_1$-$C_4$ lower alkyl group; compounds represented by general formula (V):

$$CH_2=CH\text{-}CO\text{-}N(R_8)R_9 \qquad (V)$$

wherein $R_8$ and $R_9$ each are a hydrogen atom or a $C_1$-$C_4$ lower alkyl group, provided that $R_8$ and $R_9$ are not hydrogen atoms simultaneously;

compounds represented by general formula (VI):

$$CH_2=CH\text{-}O\text{-}R_{10} \qquad (VI)$$

wherein $R_{10}$ is a $C_1$-$C_4$ lower alkyl group;

compounds represented by general formula (VII):

$$CH_2=C(R_{11})\text{-}CN \qquad (VII)$$

wherein $R_{11}$ is a hydrogen atom or a methyl group.

2. A water-soluble packaging material comprising said water-soluble thermoplastic film as claimed in claim 1.

3. A seed tape base comprising said water-soluble thermoplastic film as claimed in claim 1.

4. A printing base comprising said water-soluble thermoplastic film as claimed in claim 1.

**Patentansprüche**

1. Wasserlösliche thermoplastische Folie, enthaltend ein Copolymeres, das 35 bis 95 Gew.-% N-Vinylacetamid und 5 bis 65 Gew.-% eines von N-Vinylacetamid verschiedenen Vinylmonomeren umfaßt, und 0,5 bis 30 Gewichtsteile, auf 100 Gewichtsteile des Copolymeren, eines wasserlöslichen Weichmachers mit einer Polyoxyalkylengruppe, wobei das Vinylmonomere mindestens eine aus der folgenden Gruppe von Verbindungen ausgewählte Verbindung ist:

Verbindungen der allgemeinen Formel (I):

$$CH_2=CH\text{-}O\text{-}CO\text{-}R_1 \qquad (I)$$

worin $R_1$ eine $C_1$-$C_4$-niedere Alkylgruppe ist,

Verbindungen der allgemeinen Formel (II):

$$CH_2=C(R_2)\text{-}COO\text{-}R_3 \qquad (II)$$

worin $R_2$ ein Wasserstoffatom oder eine Methylgruppe ist und $R_3$ eine $C_1$-$C_4$-niedere Alkylgruppe ist,

Verbindungen der allgemeinen Formel (III):

$$CH_2=C(R_4)-COO(CH_2\underset{\substack{|\\ R_5}}{C}HO)_m-(CH_2\underset{\substack{|\\ R_5,}}{C}HO)_nR_6 \qquad (III)$$

worin $R_4$, $R_5$ und $R_{5'}$ jeweils ein Wasserstoffatom oder eine Methylgruppe sind, $R_6$ ein Wasserstoffatom, eine $C_1$-$C_4$-niedere Alkylgruppe oder eine Phenylgruppe ist, m und n 0 oder eine ganze Zahl von 1 bis 100 bedeuten, vorausgesetzt, daß nicht m und n gleichzeitig 0 sind,

Verbindungen der allgemeinen Formel (IV) :

$$CH_2=CH\text{-}C0\text{-}R_7 \qquad (IV)$$

worin $R_7$ eine $C_1$-$C_4$-niedere Alkylgruppe ist,

Verbindungen der allgemeinen Formel (V) :

$$CH_2=CH\text{-}CO\text{-}N(R_8)R_9 \qquad (V)$$

worin $R_8$ und $R_9$ jeweils ein Wasserstoffatom oder eine $C_1$-$C_4$-niedere Alkylgruppe bedeuten, vorausgesetzt, daß $R_8$ und $R_9$ nicht gleichzeitig Wasserstoffatome bedeuten;

Verbindungen der allgemeinen Formel (VI) :

$$CH_2=CH\text{-}O\text{-}R_{10} \qquad (VI)$$

worin $R_{10}$ eine $C_1$-$C_4$-niedere Alkylgruppe ist,

Verbindungen der allgemeinen Formel (VII) :

$$CH_2=C(R_{11})\text{-}CN \qquad (VII)$$

worin $R_{11}$ ein Wasserstoffatom oder eine Methylgruppe bedeutet.

**2.** Wasserlösliches Verpackungsmaterial, welches die wasserlösliche thermoplastische Folie gemäß Anspruch 1 umfaßt.

**3.** Grundlage für ein Saatfolienband, welche die wasserlösliche thermoplastische Folie gemäß Anspruch 1 umfaßt.

**4.** Druckunterlage, welche die wasserlösliche thermoplastische Folie gemäß Anspruch 1 umfaßt.

**Revendications**

**1.** Film thermoplastique soluble dans l'eau comprenant :

un copolymère comprenant de 35 à 95% en poids de N-vinylacétamide, de 5 à 65% en poids d'un monomère vinylique différent du N-vinylacétamide et de 0,5 à 30 parties en poids pour 100 parties en poids dudit copolymère d'un plastifiant soluble dans l'eau présentant un groupe polyoxyalkylène, dans lequel ledit monomère vinylique est au moins un composé choisi parmi :

des composés représentés par la formule générale (I) :

$$CH_2=CH\text{-}O\text{-}CO\text{-}R_1 \qquad (I)$$

dans laquelle $R_1$ et un groupe alkyle inférieur en $C_1$-$C_4$;

des composés représentés par la formule générale (II) :

$$CH_2=C(R_2)\text{-}COO\text{-}R_3 \qquad (II)$$

dans laquelle $R_2$ est un atome d'hydrogène ou un groupe méthyle; $R_3$ est un groupe alkyle inférieur en $C_1$-$C_4$;

des composés représentés par la formule générale (III) :

$$CH_2=C(R_4)-COO(CH_2\underset{\underset{R_5}{|}}{C}HO)_m-(CH_2\underset{\underset{R_{5'}}{|}}{C}HO)_nR_6 \qquad (III)$$

dans laquelle $R_4$, $R_5$ et $R_{5'}$ sont chacun un atome d'hydrogène ou un groupe méthyle; $R_6$ est un atome d'hydrogène, un groupe alkyle inférieur en $C_1$-$C_4$ ou un groupe phényle; m et n sont égaux à zéro ou à un nombre entier compris entre 1 et 100 à condition que m et n ne sont pas nuls simultanément;

des composés représentés par la formule générale (IV) :

$$CH_2=CH-CO-R_7 \qquad (IV)$$

dans laquelle $R_7$ est un groupe alkyle inférieur en $C_1$-$C_4$;

des composés représentés par la formule générale (V) :

$$CH_2=CH-CO-N(R_8)R_9 \qquad (V)$$

dans laquelle $R_8$ et $R_9$ sont chacun un atome d'hydrogène ou un groupe alkyle inférieur en $C_1$-$C_4$ à condition que $R_8$ et $R_9$ ne sont pas simultanément des atomes d'hydrogène;

des composés représentés par la formule générale (VI) :

$$CH_2=CH-O-R_{10} \qquad (VI)$$

dans laquelle $R_{10}$ est un groupe alkyle inférieur en $C_1$-$C_4$;

des composés représentés par la formule générale (VII) :

$$CH_2=C(R_{11})-CN \qquad (VII)$$

dans laquelle $R_{11}$ est un atome d'hydrogène ou un groupe méthyle.

**2.** Matériau d'emballage soluble dans l'eau comprenant ledit film thermoplastique soluble dans l'eau selon la revendication 1.

**3.** Base de ruban pour graines comprenant ledit film thermoplastique soluble dans l'eau selon la revendication 1.

**4.** Base d'impression comprenant ledit film thermoplastique soluble dans l'eau selon la revendication 1.